# EUROPÄISCHE PATENTSCHRIFT

(11) **EP 2 077 924 B1**
(45) Veröffentlichungstag und Bekanntmachung des Hinweises auf die Patenterteilung: **11.07.2012**
(21) Anmeldenummer: 07820954.1
(22) Anmeldetag: 05.10.2007
(51) Int. Cl.: B25F 5/00, B25F 5/02, B26B 25/00, B26B 29/00, F16H 1/46, F16H 55/06, H01M 2/10, B23D 45/16, B23Q 11/06, B24B 23/02, B24B 55/05, B25B 21/00, B27G 19/04, B25B 23/18, B26B 29/02

(54) **ELEKTRISCHE SCHERE**
ELECTRICAL SHEARS
CISAILLE ÉLECTRIQUE

(30) Priorität: 12.10.2006 DE 102006048315
(43) Veröffentlichungstag der Anmeldung: 15.07.2009
(73) Patentinhaber: Robert Bosch GmbH, 70442 Stuttgart (DE)
(72) Erfinder: DREHER, Ernst, 72760 Reutlingen (DE)
(86) Internationale Anmeldenummer: PCT/EP2007/060580
(87) Internationale Veröffentlichungsnummer: WO 2008/043709

(56) Entgegenhaltungen:
- EP-A- 1 213 107
- WO-A-2006/021073
- DE-A1- 2 856 866
- DE-A1- 10 330 180
- DE-A1- 19 737 239
- DE-A1- 19 815 860
- DE-A1- 19 844 501
- DE-A1-102004 032 788
- DE-A1-102004 038 788
- DE-A1-102004 051 913
- DE-A1-102005 001 774
- DE-C1- 19 704 688
- DE-U1- 9 208 407
- DE-U1- 20 102 020
- DE-U1- 20 321 137
- DE-U1- 29 501 974
- DE-U1- 29 605 033
- FR-A- 2 494 620
- FR-A- 2 533 474
- FR-A- 2 768 355
- SU-A1- 1 768 384
- US-A- 1 395 150
- US-A- 3 670 412
- US-A- 3 906 629
- US-A- 4 974 475
- US-A- 4 976 034
- US-A- 5 373 834
- US-A- 5 903 815
- US-A1- 2001 029 819
- US-A1- 2003 041 717
- US-A1- 2003 181 152
- US-B1- 6 732 606

## Beschreibung

### Stand der Technik

Die Erfindung geht aus von einer elektrischen Schere, nach dem Oberbegriff des Anspruchs 1.

Eine bekannte elektrische Schere zum Schneiden von Blattmaterial, wie Stoffe, Papier- und Kartonbahnen und dgl., (SU 1 768 384 A1) weist ein langgestrecktes Gehäuse mit einem Werkzeugkopf und einem Griffteil auf. Im Werkzeugkopf ist eine quer zur Gehäuselängsachse ausgerichtete Antriebswelle gelagert, die seitlich aus dem Werkzeugkopf vorsteht. Auf der Antriebswelle ist ein scheibenförmiges Mehrkant-Schneidrad verdrehsicher aufgenommen, dessen in Arbeitsstellung nach oben weisender Rand über mehr als 180° Umfangswinkel von einem am Gehäuse ausgebildeten Schutzkragen überdeckt ist. Am Werkzeugkopf ist ein nach unten vorstehender winkelförmiger Messerhalter befestigt, der ein mit dem Schneidrad zusammenwirkendes Gegenmesser trägt und an dem ein dem unteren Randbereich des Schneidrads gegenüberliegender Auflagefuß ausgebildet ist. der Messerhalter ist so am Gehäuse angeordnet, dass die Auflagefläche des Auflagefußes und die Längsachse des Gehäuses einen spitzen Winkel einschließen. Im Griffteil sind ein Elektromotor und ein Getriebe zum Antreiben der das Schneidrad tragenden Antriebswelle angeordnet. Die Stromversorgung des Elektromotors erfolgt über ein elektrisches Gerätekabel.

Eine bekannte Universal-Schneidvorrichtung für flächige Materialien, wie Tapeten und Fußbodenbeläge, (DE 197 04 688 C1) weist eine mit einem Gegenmesser zusammenwirkende, rotierende Schneidscheibe auf, auf deren Peripherie eine Vielzahl von geraden Schneiden sekantiell unter Ausbildung eines Vielecks aneinandergereiht sind. Die Schneidscheibe wird von einem akkugespeisten Elektromotor angetrieben, der in einem zweiteiligen, abgeknickten, rohrförmigen Gehäuse aufgenommen ist, wobei der Akku in einem als Griffteil ausgebildeten hinteren Gehäuseteil und der Elektromotor in einem davon abgewinkelten, an das hintere

Gehäuseteil angesetzten vorderen Gehäuseteil untergebracht ist. Am freien Ende des vorderen Gehäuseteils ist ein vorstehender Messerträger angeordnet, an dem die Schneidscheibe mittels einer quer zur Gehäuseachse ausgerichteten Antriebswelle gelagert und das Gegenmesser befestigt ist. Die Antriebswelle ist über ein Getriebe mit der Abtriebswelle des Elektromotors gekoppelt. Im Griffteil ist ein am Gehäuse zugängliches Betätigungselement für einen im Stromkreis des Elektromotors angeordneten elektrischen Schalter zum Ein- und Ausschalter des Elektromotors vorhanden.

Ein bekannter Akkuschrauber (DE 10 2004 051 913 A1 oder DE 203 21 137 U1 oder DE 10 2004 038 788 A1) weist ein pistolenartiges Gehäuse auf, das ein einen Elektromotor aufnehmendes Motorgehäuse und einen davon abgewinkelten Handgriff mit einem Ein-/Ausschalter für den Elektromotor und einem fest eingesetzten, als Lithium-Ionen-Zelle ausgebildeten Akku aufweist. Das Gehäuse mit Motorgehäuse und Handgriff ist aus zwei in einer Mittenebene aneinanderliegenden Halbschalen zusammengesetzt. Der Akku ist auf einer zur Längsseite des Handgriffs sich parallel erstreckende Platine angeordnet und mit dieser kontaktiert. Der Ein-/Ausschalter ist mittels Kontaktfahnen auf die vom Akku abgekehrte Längsseite der Platine kontaktiert. Der an der Vorderseite des Handgriffs zugängliche Ein-/Ausschalter ist eine großflächige Taste. Auf der von der Vorderseite abgekehrten Rückseite des Handgriffs ist ein strukturierter Handgriffbelag befestigt. Die Abtriebswelle des Elektromotors ist über ein Getriebe auf eine mit der Abtriebswelle koaxiale Antriebsspindel gekoppelt, die stirnseitig als Innensechskant zur Aufnahme passender Standardbits ausgestaltet ist. Getriebe und Antriebsspindel sind in einem Getriebegehäuse aufgenommen, das als separates, einteiliges Bauteil an das vom Handgriff abgekehrte Stirnende des Motorgehäuses angesetzt ist.

Ein bekannter Akku-Schlagschrauber (DE 10 2004 032 788 A1) weist ein pistolenförmiges Gehäuse mit einem Handgriff auf, an dessen in Arbeitsrichtung weisender Vorderseite eine Schalttaste zum Ein- und Ausschalten eines von einem Akku gespeisten Elektromotors angeordnet ist. Der Elektromotor ist in dem vom Handgriff abgewinkelten Gehäusebereich aufgenommen und treibt eine mit der Achse des Gehäusebereichs und der Abtriebswelle des Elektromotors koaxiale Antriebsspindel an, die an ihrem freien Ende eine Sechskantaufnahme zum Einstecken eines Schraubbits besitzt. Der Akku ist an dem von dem den Elektromotor aufnehmenden Gehäusebereich abgekehrten Ende des Handgriffs lösbar angesetzt.

Eine bekannte Rotationsschere (US 3 906 629) weist einen rohrförmigen Powergriff auf, in dem ein Elektromotor aufgenommen ist. Der Elektromotor hat eine zur Griffachse koaxiale Abtriebswelle, an deren Ende ein Schneckengetriebe angeordnet ist. Das Schneckengetriebe ist in einem am Powergriff angesetzten Schneidkopf aufgenommen. Am Schneidkopf sind ein über das Schneckengetriebe angetriebenes Schneidrad und ein mit diesem zusammenwirkendes rotierendes Gegenscheidrad drehbar gehalten.

Eine bekannte Döner-Schneidemaschine (DE 10 2005 001 774 A1) weist ein rotierendes Kreismesser auf, das auf einer von einem Elektromotor über ein Getriebe angetriebenen Messerwelle sitzt. Elektromotor und Kreismesser sind in einem Gehäuse aufgenommen, aus dem das Kreismesser teilweise herausragt. Am Gehäuse ist ein rechtwinklig abgehender Handgriff mit einem Ein-/Ausschalter befestigt, wobei der Handgriff gegenüber dem Gehäuse um einen Winkel schwenkbar und in der Schwenkposition festsetzbar ist.

Eine bekannte Handkreissägemaschine (US 2001/0029819 A1) weist eine Lampe zur Beleuchtung eines Teils des Werkstücks bei Durchführung einer Sägearbeit auf. Die Lampe ist an einer das rotierende Sägeblatt abdeckenden Schutzhaube so angeordnet, dass sie seitlich zum Sägeblatt versetzt ist.

### Offenbarung der Erfindung

Die erfindungsgemäße elektrische Schere, mit den Merkmalen des Anspruchs 1 hat den Vorteil, kompakt, bauklein und leichtgewichtig zu sein und dadurch ein ermüdungsfreies Arbeiten zu ermöglichen. Das Gehäuse besteht nur aus dem Werkzeugkopf und dem damit einstückigen Griffteil und nimmt alle erforderlichen Komponenten, einschließlich der kabellosen Stromversorgung, auf. Die Verlagerung des Elektromotors und des Getriebes in den Werkzeugkopf schafft nicht nur Platz für den Energiespeicher und die Elektronik, sondern legt auch den Schwerpunkt der Handwerkzeugmaschine sehr weit nach unten in den Werkzeugkopf und damit näher zum Werkstück, was die Ergonomie der Handhabung verbessert. Die Ergonomie ist noch dadurch wesentlich verbessert, dass das Gehäuse bananenähnlich gekrümmt ausgeführt ist, wodurch der Griffteil in einer ergonomisch günstige Stellung von der Oberfläche des zu bearbeitenden Werkstücks deutlich beabstandet ist, so dass die Finger des die Handwerkzeugmaschine Bedienenden zu keinem Zeitpunkt des Arbeitens mit der Werkstückoberfläche in Berührung kommen kann. Die Anordnung des elektrischen Schalters des Ein-/Ausschalters auf einer im Griffteil integrierten Elektronikplatine und des als Lithium-Ionen-Akku ausgebildeten, volumenkleinen Energiespeichers oberhalb der Elektronikplatine sowie die Aufnahme der Abtriebswelle einerseits in einem in die eine Gehäuseschale eingepressten Kugellager und andererseits in einer in die andere Gehäuseschale eingepressten Sinterbuchse tragen zu einem kleineren Bauvolumen und einem geringen Gewicht der elektrischen Schere bei und ermöglichen darüber hinaus eine kostengünstige Herstellung der Schere zur Einhaltung niedriger Gestehungskosten.

Durch die in den weiteren Ansprüchen aufgeführten Maßnahmen sind vorteilhafte Weiterbildungen und Verbesserungen der im Anspruch 1 angegebenen Handwerkzeugmaschine möglich.

### Kurze Beschreibung der Zeichnungen

Die erfindungsgemäße elektrische Schere ist anhand eines in der Zeichnung dargestellten Ausführungsbeispiels in der nachfolgenden Beschreibung näher erläutert. Es zeigen:
- Fig. 1: eine Seitenansicht einer elektrischen Schere,
- Fig. 2: eine perspektivische Seitenansicht der elektrischen Schere in Fig. 1 nach Entfernen einer Gehäuseschale des Gehäuses und eines Griffbelags,
- Fig. 3: einen Längsschnitt der elektrischen Schere gemäß der in Fig. 2 mit III - III angedeuteten Schnittebene,

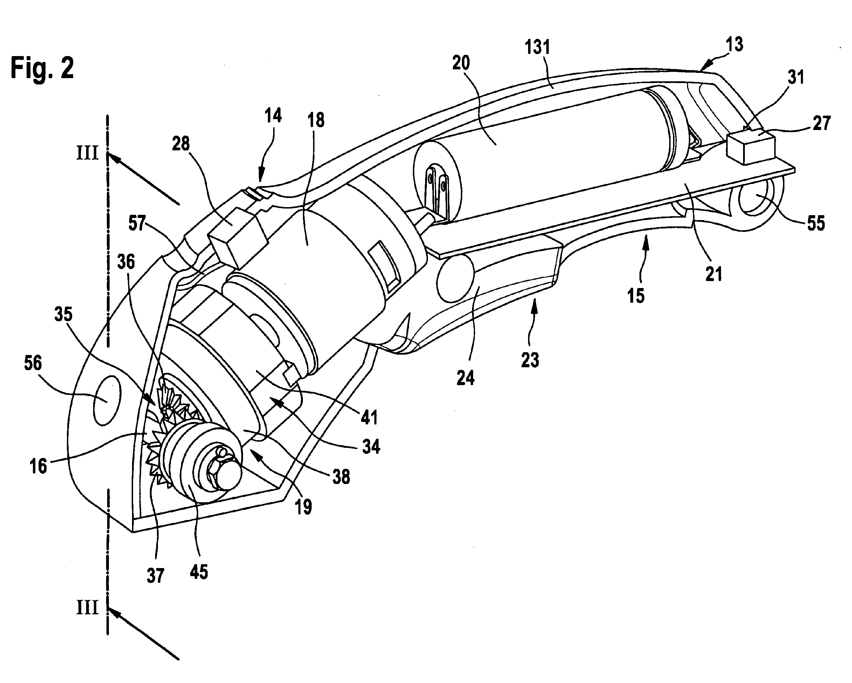

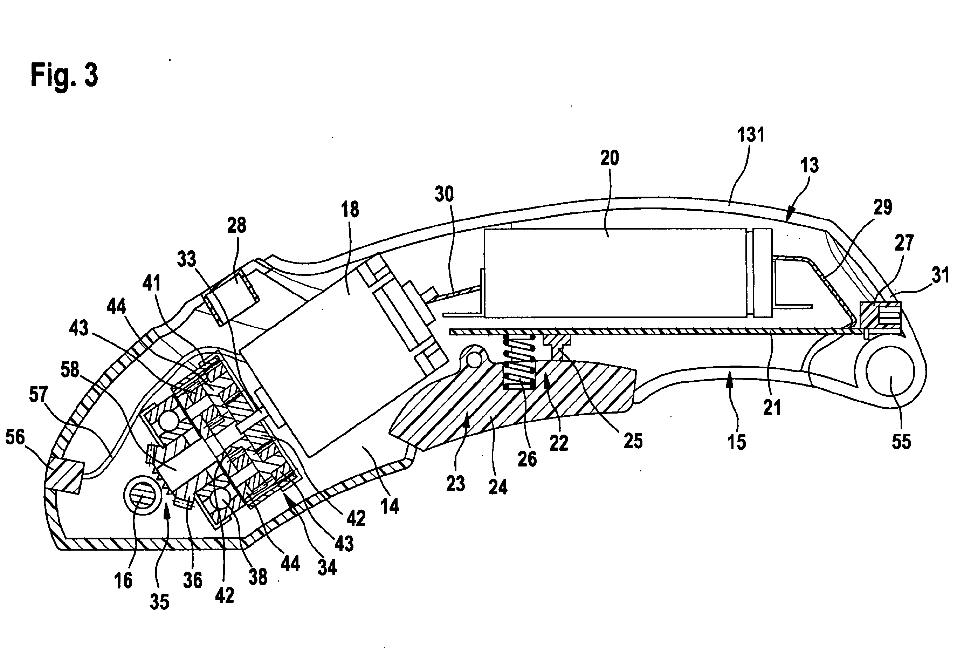

- Fig. 3: einen Längsschnitt der elektrischen Schere gemäß der in Fig. 2 mit III - III angedeuteten Schnittebene,

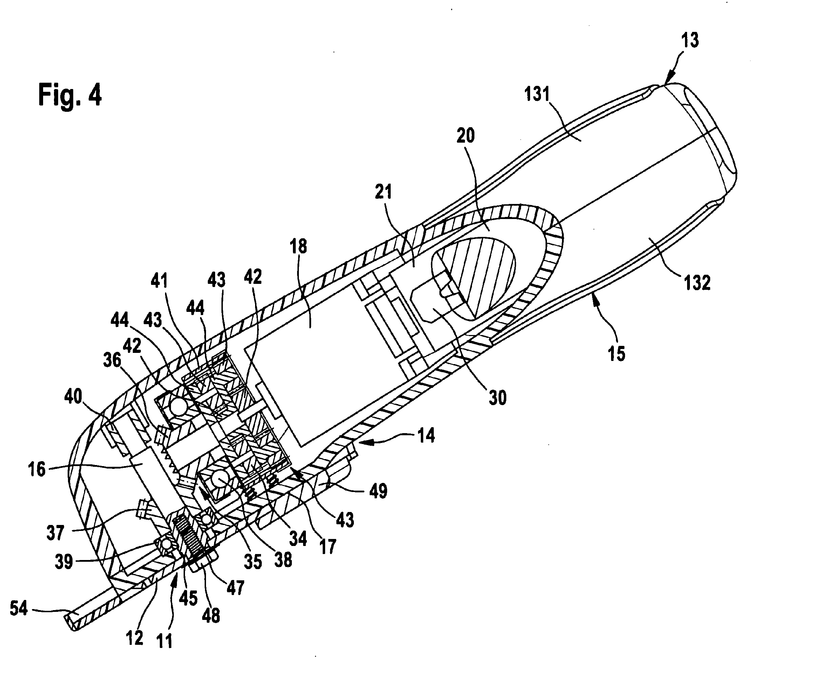

- Fig. 4: einen Schnitt längs der Linie IV - IV in Fig. 3.

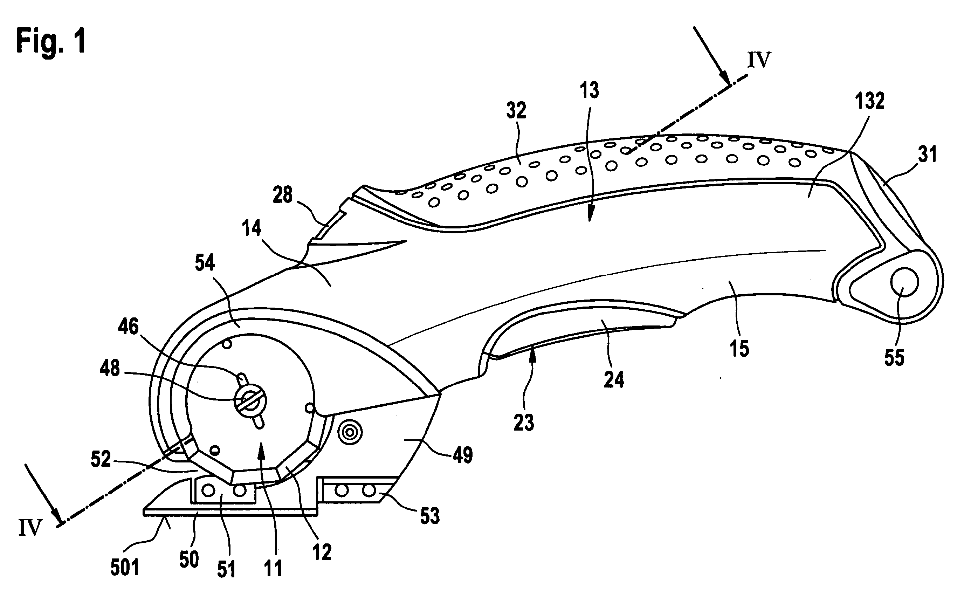

Die in der Zeichnung in verschiedenen Ansichten und Schnitten dargestellte elektrische Schere, auch elektrisches Universalmesser genannt, dient als Ausführungsbeispiel. Im Ausführungsbeispiel der elektrischen Schere ist das scheibenförmige Drehwerkzeug 11 ein Mehrkant-Schneidrad 12, genauer ein 10-Kant-Schneidrad. Die elektrische Schere weist ein Gehäuse 13 auf, das aus zwei Gehäuseschalen 131, 132 zusammengesetzt ist. Das Gehäuse 13 umfasst einen Werkzeugkopf 14, an dem das Drehwerkzeug 11 seitlich angeordnet ist und einen sich daran anschließenden Griffteil 15. Werkzeugkopf 14 und Griffteil 15 sind einstückig miteinander ausgebildet, so dass jede Gehäuseschale 131, 132 jeweils einen Teil des Werkzeugkopfes 14 und des Griffteils 15 bildet. Im Werkzeugkopf 14 ist eine quer zur Gehäuselängsachse ausgerichtete Antriebswelle 16 drehbar gelagert, die in einem abgeflachten Bereich 17 (Fig. 4) der in Fig. 1 vorderen Gehäuseschale 132 aus dem Werkzeugkopf 14 mit einem Vorstehende herausragt und hier das Drehwerkzeug 11 aufnimmt. Die Antriebswelle 16 wird von einem Elektromotor 18 über ein Getriebe 19 (Fig. 2) rotatorisch angetrieben. Getriebe 19 und Elektromotor 18 sind im Werkzeugkopf 14 angeordnet. Der Elektromotor 18 wird von einem aufladbaren, volumenkleinen Energiespeicher 20 mit hoher Ladekapazität gespeist. Als ein solcher Energiespeicher wird ein Lithium-Ionen-Akku bevorzugt, so dass im folgenden der Energiespeicher kurz Akku 20 genannt wird. Der Akku 20 ist zusammen mit einer Elektronikplatine 21 und einem Ein-/Ausschalter 22 für die elektrische Schere im Griffteil 15 des Gehäuses 13 integriert. Dabei ist der Akku 20 oberhalb der Elektronikplatine 21 angeordnet. Der Ein-/Ausschalter 22 besteht aus einem im Stromkreis von Akku 20 und Elektromotor 18 angeordneten, hier nicht dargestellten, auf der Elektronikplatine 21 angeordneten, elektrischen Schalter und einem Betätigungselement 23, das als großflächige Taste 24 ausgebildet ist, die auf der Unterseite des Griffteils 15 vorsteht und über einen an der Unterseite der Elektronikplatine 21 angeordneten Stempel 25 den elektrischen Schalter betätigt (Fig. 3). Die Taste 24 ist schwenkbar im Griffteil 15 gelagert und durch eine Rückstellfeder 26 in einer Ausposition des Ein-Ausschalters 22 gehalten. Durch die Schwenklagerung der Taste 24 ergibt sich vorteilhaft für den elektrischen Schalter ein kurzer und für die Rückstellfeder 26 ein langer Hub. Die Großflächigkeit der Taste 24 ermöglicht ein ergonomisch vorteilhaftes Betätigen des Ein-/Ausschalters 22 durch den Bediener.

Auf der Elektronikplatine 21 ist eine Schaltung zum Laden und Überwachen des Ladezustands des Akkus 20 angeordnet. Eine auf der Elektronikplatine 21 befestigte Ladebuchse 27, die durch eine Aussparung 31 am hinteren Ende des Griffteils 15 für einen Ladestecker eines Ladegeräts zugänglich ist, ist mit der Schaltung verbunden. In einem in der Arbeitsstellung der elektrischen Schere für den Bediener sichtbaren Bereich des Gehäuses 13 ist eine Ladezustandsanzeige 28 angeordnet, die ebenfalls an der Schaltung angeschlossen ist. Im dargestellten Ausführungsbeispiel ist die Ladezustandsanzeige 28 auf der Oberseite des dem Griffteil 15 zugekehrten Endes des Werkzeugskopfes 14 angeordnet (Fig. 1 bis 3). Der Akku 20 ist mittels Anschlussfahnen 29 und der Elektromotor 18 mittels Anschlussfahnen 30 auf die Elektronikplatine 21 kontaktiert. Auf der von der Taste 24 abgekehrten Oberseite des Griffteils 15 ist ein Griffbelag 32 mit einer golfballähnlichen Struktur befestigt (Fig. 1). Der Griffbelag 32 ermöglicht ein rutschfestes, sicheres Halten und Führen der elektrischen Schere.

Das im Werkzeugkopf 14 angeordnete Getriebe 19 besteht aus einem Reduziergetriebe und einem im Kraftfluss nachgeordneten Umlenkgetriebe (Fig. 3 und 4). Eine solche Getriebezusammensetzung lässt sich recht bauklein ausführen. Das Reduziergetriebe ist als mehrstufiges, im Ausführungsbeispiel zweistufiges Planetengetriebe 34 mit einer Eingangsstufe und einer Ausgangsstufe und das Umlenkgetriebe als Kegelradgetriebe 35 ausgebildet, das zwei miteinander kämmende, mit den Radachsen rechtwinklig zueinander ausgerichtete Kegelräder 36, 37 aufweist. Die Eingangsstufe des Planetengetriebes 34 ist an die Motorwelle 33 des Elektromotors 18 und die Ausgangsstufe des Planentengetriebes 34 an das erste Kegelrad 36 des Kegelradgetriebes 35 angekoppelt. Die beiden Kegelräder 36, 37 weisen eine gleiche Zahnzahl auf und sind aus Messing gefertigt. Das erste Kegelrad 36 ist in einem im Gehäuse 13 festgelegten Kugellager 38 aufgenommen und das zweite Kegelrad 37 ist auf die Antriebswelle 16 aufgepresst. Die Antriebswelle 16 selbst ist einerseits in einem Kugellager 39, das eine Festlagerfunktion ausübt, und andererseits in einer Sinterbuchse 40 (Fig. 4) gelagert. Die Sinterbuchse 40 ist in die Gehäuseschale 131 und das Kugellager 39 in die Gehäuseschale 132 eingepresst.

Im Planetengetriebe 34 haben alle Getriebestufen ein gemeinsames, im Gehäuse 13 festgelegtes Hohlrad 41, das sich über die Axiallänge des Planetengetriebes 34 erstreckt. Jede Getriebestufe weist ein Sonnenrad 42, mit dem Sonnenrad 42 und dem Hohlrad 41 kämmende Planetenräder 43 (im Ausführungsbeispiel jeweils drei Planentenräder 43) und einen die Planetenräder 43 tragenden Planetenradträger 44 auf. Das Sonnenrad 42 der Eingangsstufe ist mitnahmesicher auf die Motorwelle 33 aufgesteckt, während das Sonnenrad 42 der Ausgangsstufe Teil des Planetenradträgers 44 der Eingansstufe ist. Hat das Planetengetriebe 35 mehr als zwei Getriebestufen, so ist an jedem Planetenradträger 44 das Sonnenrad 42 der nächsten Getriebestufe befestigt bzw. einstückig mit diesem ausgebildet. Bei drei Getriebestufen wäre dann das Sonnenrad 42 der mittleren Getriebestufe mit dem Planetenradträger 41 der Eingangsstufe und das Sonnenrad 42 der Ausgangsstufe mit dem Planetenradträger 44 der mittleren Getriebestufe vereinigt. Der Planentenradträger 44 der Ausgangsstufe ist auf einer zapfenartigen Abtriebswelle 58 fixiert, auf der das erste Kegelrad 36 des Kegelradgetriebes 35 undrehbar sitzt. Die Planetenräder 43 der Getriebestufen sind aus Sinterstahl gefertigt, und das Hohlrad 41 ist ein Sinterteil, was zur Gewichts- und Kosteneinsparung beiträgt. Der im abgeflachten Bereich 17 des Werkzeugkopfes 14 aus dem Gehäuse 13, genauer aus der Gehäuseschale 132, seitlich herausragende Wellenabschnitt der Antriebswelle 16 weist einen Auflageflansch 45 (Fig. 2 und 4) mit einer daran ausgebildeten Drehmitnahme 46 (Fig. 1) für das Drehwerkzeug 11 auf. In der Antriebswelle 16 ist ein von ihrem freien Stirnende her eingebrachte, axiale Gewindebohrung 47 vorhanden. In die Gewindebohrung 47 ist eine Flachkopfschraube 48 (Fig. 1 und 4) eingeschraubt, die das auf dem Auflageflansch 45 drehfest aufliegende, scheibenförmige Drehwerkzeug 11, hier Mehrkant-Schneidrad 12, axial sichert

Am Gehäuse 13, genauer an der Gehäuseschale 132, ist im abgeflachten Bereich 17, der etwas größer ausgebildet ist als der Durchmesser des Drehwerkzeugs 11, ein winkelförmiges Messerhalteblech 49 lösbar befestigt (Fig. 1 und 4). Am Messerhalteblech 49 ist ein Auflagefuß 50 ausgebildet, mit dem die elektrische Schere beim Schneiden auf einer Führungsebene geführt werden kann. Etwa parallel zu der Auflagefläche 501 des Auflagefußes 50 ist ein rechteckförmiges Gegenmesser 51 angeordnet, das mit dem Drehwerkzeug 11 bzw. dem Mehrkant-Schneidrad 12 einen Keilspalt 52 (Fig. 1) einschließt, dessen Öffnung in Arbeitsrichtung weist Das Gegenmesser 51 ist auf einer Blattfeder 53 aufgenietet, die ihrerseits auf der in Fig. 1 nicht zu sehenden Seite des Auflagefußes 50 befestigt ist.

Das Messerhalteblech 49 ist lösbar an der Gehäuseschale 132 gehalten und kann - wie hier nicht dargestellt ist - gegen einen angefederten Schutzbügel ausgetauscht werden. Dieser Schutzbügel überdeckt den vom Messerhalteblech 49 freigegebenen, unteren Randbereich des Drehwerkzeugs 11 bzw. Mehrkant-Schneidrads 12 und dient bei Nichtgebrauch der elektrischen Schere dem Schutz gegen Berühren. Mit diesem Schutzbügel können mit der elektrischen Schere Schneidarbeiten ohne Gegenmesser 51 ausgeführt werden.

An dem abgeflachten Bereich 17 der Gehäuseschale 132 ist noch eine Schutzhaube 54 schwenkbar angeordnet (Fig. 1). Die Schutzhaube 54 überdeckt den vom Auflagefuß 50 abgekehrten oberen Randbereich des Drehwerkzeugs 11, so dass dieses nicht berührt werden kann. Der Erstreckungswinkel der Schutzhaube 54 beträgt mehr als 180°. Die Schutzhaube 54 ist angefedert, und schiebt sich bei Nichtgebrauch der elektrischen Schere über den Keilspalt 52, so dass das Drehwerkzeug 11 randseitig völlig von Auflagefuß 50 und Schutzhaube 54 abgedeckt ist. Über eine Hebel- oder Seilzugmechanik ist die Schutzhaube 54 mit dem Ein-/Ausschalter 22 so gekoppelt, dass mit Betätigen der Taste 24 zum Einschalten des Elektromotors 18 die Schutzhaube 54 in Fig. 1 im Uhrzeigersinn soweit geschwenkt wird, dass der Keilspalt 52 zwischen Drehwerkzeug 11 und Gegenmesser 51 freigegeben ist. Alternativ kann die Schutzhaube 54 auch einstückig an die Gehäuseschale 132 angeformt sein, wobei ihr Überdeckungsbereich für das Drehwerkzeug 11 vor dem Keilspalt 52 endet.

Wie Fig. 1 und 3 zeigen, ist an dem vom Werkzeugkopf 15 abgekehrten hinteren Ende des Gehäuses 13 eine Aufhängeöse 55 angeformt Anstelle einer Aufhängeöse 55 kann aber auch eine Ablageleiste am Gehäuse 13 ausgebildet sein. Wie Fig. 2 und 3 zeigen, ist in der in Arbeitsrichtung weisenden Frontseite des Werkzeugkopfes 15 mindestens eine elektrische Lampe angeordnet, die vorzugsweise als LED 56 ausgebildet ist. Die LED 56 ist über eine Verbindungsleitung 57 zur Elektronikplatte 21 geführt und dort an die Schaltung angeschlossen. Der elektrische Schalter des Ein-/Ausschalters 22 ist zweistufig ausgebildet, wobei mit Betätigen der Taste 24 der elektrische Schalter nacheinander in Stufe "1" und Stufe "2" überführt wird. In Stufe "1" wird dabei die LED 56 eingeschaltet und in Stufe "2" zusätzlich der Stromkreis zwischen Akku 20 und Elektromotor 18 geschlossen. Alternativ kann die LED 56 auch an einen separaten, am Gehäuse 13 zugänglichen Schalter angeschlossen sein, so dass die LED 56 unabhängig von der Inbetriebnahme der elektrischen Schere ein- und ausgeschaltet werden kann. In diesem Fall lässt sich die elektrische Schere auch als Taschenlampe verwenden.

## Patentansprüche

1. Elektrische Schere, mit einem Gehäuse (13), das einen Werkzeugkopf (14) und einen Griffteil (15) aufweist, mit einem im Gehäuse (13) angeordneten Elektromotor (18), mit einem Ein-/Ausschalter (22), der einen im Stromkreis des Elektromotors (18) angeordneten, elektrischen Schalter und ein am Gehäuse (13) zugängliches Betätigungselement (23) für den elektrischen Schalter aufweist, mit einer im Werkzeugkopf (14) gelagerten, quer zur Gehäuseachse ausgerichteten Antriebswelle (16), die vom Elektromotor (18) über ein Getriebe (19) antreibbar ist, mit einem auf der Antriebswelle (16) festsetzbaren Drehwerkzeug (11), mit einem den Elektromotor (18) speisenden, aufladbaren, volumenkleinen Energiespeicher mit hoher Ladekapazität, der zusammen mit einer Elektronikplatine (21) und dem Ein-/Ausschalter (22) im Griffteil (15) integriert ist, **dadurch gekennzeichnet, dass** das Gehäuse (13) bananenförmig gekrümmt und aus zwei Gehäuseschalen (131, 132) zusammengesetzt ist, dass das Betätigungselement (23) des Ein-/Ausschalters (22) an der Unterseite des Griffteils (15) angeordnet und als aus dem Griffteil (15) vorstehende, großflächige Taste (24) ausgebildet und auf der von dem Betätigungselement (23) abgekehrten Oberseite des Griffteils (15) ein Griffbelag (32) mit einer der Oberflächenstruktur eines Golfballs nachgebildeten Struktur befestigt ist, dass der elektrische Schalter des Ein-/Ausschalters (22), eine durch eine Aussparung (58) im Gehäuse (13) zugängliche Ladebuchse (27) sowie eine Schaltungsanordnung zum Laden und Überwachen des Ladezustands des Energiespeichers (20) auf der Elektronikplatine (21) angeordnet sind und der Energiespeicher (20) als Lithium-Ionen-Akku (20) ausgebildet ist und oberhalb der Elektronikplatine (21) angeordnet und mittels Anschlussfahnen (29) auf die Elektronikplatine (21) kontaktiert ist, dass das Getriebe (19) und zumindest teilweise der Elektromotor (18) im Werkzeugkopf (14) angeordnet sind, dass die Antriebswelle (16) einerseits in einem in der einen Gehäuseschale (132) eingepressten Kugellager (39) aufgenommen und andererseits in einer in der anderen Gehäuseschale (131) eingepressten Sinterbuchse (40) gelagert ist und auf einem am Gehäuse (13) seitlich vorstehenden Wellenendabschnitt einen Auflageflansch (45) mit einer daran ausgebildeten Drehmitnahme (46) für das als Mehrkant-Schneidrad (12) ausgebildete, scheibenförmige Drehwerkzeug (11) aufweist und dass in einem abgeflachten Bereich (17) des Gehäuses (13) ein Messerhalteblech (49) mit einem daran gehaltenen, mit dem Mehrkant-Schneidrad (12) zusammenwirkenden Gegenmesser (51) und einem Auflagefuß (50) lösbar befestigt ist.

2. Elektrische Schere nach Anspruch 1, **dadurch gekennzeichnet, dass** eine am Gehäuse (13) sichtbare Ladezustandsanzeige (28) mit der Elektronikplatine (21) verbunden ist.

3. Elektrische Schere nach Anspruch 1 oder 2, **dadurch gekennzeichnet, dass** die Taste (24) schwenkbar im Griffteil (15) festgelegt und durch eine Rückstellfeder in einer Ausposition des Ein-/Ausschalters (22) gehalten ist.

4. Elektrische Schere nach einem der Ansprüche 1 bis 3, **dadurch gekennzeichnet, dass** das im Werkzeugkopf (14) angeordnete Getriebe (19) ein als mehrstufiges Planetengetriebe (34) mit einer Ein- und Ausgangsstufe ausgebildetes Reduziergetriebe und ein diesem im Kraftfluss nachgeordnetes Umlenkgetriebe umfasst, das als Kegelradgetriebe (35) mit zwei miteinander kämmenden, mit den Radachsen rechtwinklig zueinander ausgerichteten Kegelrädern (36, 37) ausgebildet ist, und dass die Eingangsstufe des Planetengetriebes (34) an den Elektromotor (18) und die Ausgangsstufe des Planetengetriebes (34) an das erste Kegelrad (36) des Kegelradgetriebes (35) angekoppelt und das zweite Kegelrad (37) auf der Antriebswelle (16) befestigt ist.

5. Elektrische Schere nach Anspruch 4, **dadurch gekennzeichnet, dass** die Getriebestufen des Planetengetriebes (34) ein gemeinsames, im Gehäuse (13) festgelegtes Hohlrad (41) aufweisen, das sich über die Axiallänge des Planetengetriebes (34) erstreckt.

6. Elektrische Schere nach Anspruch 4 oder 5, **dadurch gekennzeichnet, dass** jede Getriebestufe des Planetengetriebes (34) ein Sonnenrad (42), mit dem Sonnenrad (42) und dem Hohlrad (41) kämmende Planetenräder (43) und einen die Planetenräder (43) tragenden Planetenradträger (44) aufweist, dass das Sonnenrad (42) der Eingangsstufe auf der Motorwelle (33) des Elektromotors (18) befestigt ist, an jedem Planetenradträger (44) das Sonnenrad (42) der nachfolgenden Getriebestufe befestigt ist und der Planetenradträger (44) der Ausgangsstufe fest mit einer das eine Kegelrad (36) tragenden Abtriebswelle (60) verbunden ist.

7. Elektrische Schere nach Anspruch 6, **dadurch gekennzeichnet, dass** die auf den Planetenradträgern (44) befestigten Sonnenräder (42) mit dem jeweiligen Planetenradträger (44) einstückig ausgebildet sind.

8. Elektrische Schere nach einem der Ansprüche 4 bis 7, **dadurch gekennzeichnet, dass** das Sonnenrad (42) der Eingangsstufe des Planetengetriebes (34) mitnahmesicher auf der Motorwelle (33) aufgesteckt ist.

9. Elektrische Schere nach einem der Ansprüche 4 bis 8, **dadurch gekennzeichnet, dass** die Planetenräder (43) mindestens der Ausgangsstufe des Planetengetriebes (34) aus Sinterstahl sind.

10. Elektrische Schere nach einem der Ansprüche 4 bis 9, **dadurch gekennzeichnet, dass** das Hohlrad (41) ein Sinterteil ist.

11. Elektrische Schere nach einem der Ansprüche 4 bis 10, **dadurch gekennzeichnet, dass** die Kegelräder (36, 37) des Kegelradgetriebes (35) eine gleiche Zähnezahl aufweisen.

12. Elektrische Schere nach einem der Ansprüche 4 bis 11, **dadurch gekennzeichnet, dass** die Kegelräder (36, 37) des Kegelradgetriebes (35) aus Messing sind.

13. Elektrische Schere nach einem der Ansprüche 4 bis 12, **dadurch gekennzeichnet, dass** das erste Kegelrad (36) in einem Kugellager (38) gehalten und das zweite Kegelrad (37) auf der Antriebswelle (16) aufgepresst ist.

14. Elektrische Schere nach einem der Ansprüche 1 bis 13, **dadurch gekennzeichnet, dass** die Antriebswelle (16) eine von ihrem freien Stirnende her eingebrachte Gewindebohrung (47) aufweist und dass das auf dem Auflageflansch (45) aufliegende, scheibenförmige Drehwerkzeug (11) durch eine in die Gewindebohrung (47) eingeschraubte Kopfschraube, vorzugsweise Flachkopfschraube (48), axial gesichert ist.

15. Elektrische Schere nach einem der Ansprüche 1 bis 14, **dadurch gekennzeichnet, dass** das Gehäuse (13) im Bereich des aus dem Gehäuse (13) austretenden Wellenendabschnitts der Antriebswelle (16) abgeflacht ist und die Größe des Abflachungsbereichs (17) an die Flächengröße des scheibenförmigen Drehwerkzeugs (11) angepasst ist und dass am Gehäuse (13) eine Schutzhaube (54) angeordnet ist, die sich mindestens über den in Arbeitsstellung oberen Randbereich des scheibenförmigen Drehwerkzeugs (11) erstreckt.

16. Elektrische Schere nach Anspruch 15, **dadurch gekennzeichnet, dass** die Schutzhaube (54) an die eine Gehäuseschale (132) des Gehäuses (13) angeformt ist.

17. Elektrische Schere nach Anspruch 15, **dadurch gekennzeichnet, dass** die Schutzhaube (54) an der einen Gehäuseschale (132) schwenkbeweglich gehalten ist und sich zusätzlich über den in Arbeitsrichtung vorderen Randbereich des Mehrkant-Schneidrads (12)ausdehnt und zu ihrer Schwenkung mit dem Ein-/Ausschalter (22) für den Elektromotor (18) mechanisch gekoppelt ist.

18. Elektrische Schere nach einem der Ansprüche 1 bis 17, **dadurch gekennzeichnet, dass** in der in Arbeitsrichtung weisenden Frontseite des Werkzeugkopfes (14) mindestens eine, vorzugsweise als LED (56) ausgebildete, elektrische Lampe angeordnet ist.

19. Elektrische Schere nach Anspruch 18, **dadurch gekennzeichnet, dass** die mindestens eine elektrische Lampe mit einem am Gehäuse (13) manuell zugänglichen Schalter ein- und ausschaltbar ist.

20. Elektrische Schere nach Anspruch 19, **dadurch gekennzeichnet, dass** der elektrische Schalter des Ein-Ausschalters (22) zweistufig ausgelegt ist und in seiner ersten Schaltstellung die mindestens eine Lampe einschaltet und in seiner zweiten Schaltstellung den elektrischen Schaltkreis für den Elektromotor (18) schließt.

## Claims

1. Electric shears, having a housing (13) which has a tool head (14) and a handle part (15), having an electric motor (18) which is arranged in the housing (13), having an on/off switch (22) which has an electrical switch which is arranged in the electrical circuit of the electric motor (18) and has an operating element (23) for the electrical switch, which operating element is accessible on the housing (13), having a drive shaft (16) which is mounted in the tool head (14), is oriented transverse to the housing axis and can be operated by the electric motor (18) via a gear mechanism (19), having a rotary tool (11) which can be fixed on the drive shaft (16), having an energy storage means of low volume and high charging capacity which feeds the electric motor (18), can be recharged and is integrated in the handle part (15) together with an electronics printed circuit board (21) and the on/off switch (22), **characterized in that** the housing (13) is bent in the shape of a banana and is composed of two housing shells (131, 132), **in that** the operating element (23) of the on/off switch (22) is arranged on the lower face of the handle part (15) and is in the form of a button (24) which projects from the handle part (15) and has a large surface area, and a handle covering (32) with a structure which resembles the surface structure of a golf ball is mounted on the upper face of the handle part (15) which is averted from the operating element (23), **in that** the electrical switch of the on/off switch (22), a charging socket (27) which is accessible through a cutout (58) in the housing (13) and a circuit arrangement for charging and monitoring the state of charge of the energy storage means (20) are arranged on the electronics printed circuit board (21) and the energy storage means (20) is in the form of a lithium-ion rechargeable battery (20) and is arranged above the electronics printed circuit board (21) and contact is made with said energy storage means by means of connection lugs (29) on the electronics printed circuit board (21), **in that** the gear mechanism (19) and at least partially the electric motor (18) are arranged in the tool head (14), **in that** the drive shaft (16) is accommodated on one side in a ball bearing (39) which is pressed into one housing shell (132) and on the other side is mounted in a sintered socket (40) which is pressed into the other housing shell (131), and has, on a shaft end section which projects laterally from the housing (13), a support flange (45) with a rotary driver (46) formed on it for the disc-like rotary tool (11) which is in the form of a polygonal cutting wheel (12), and **in that** a blade holding plate (49) having a mating blade (51), which is held on said blade holding plate and interacts with the polygonal cutting wheel (12), and a support foot (50) are detachably mounted in a flattened region (17) of the housing (13).

2. Electric shears according to Claim 1, **characterized in that** a state of charge indicator (28), which is visible on the housing (13), is connected to the electronics printed circuit board (21).

3. Electric shears according to Claim 1 or 2, **characterized in that** the button (24) is fixed in the handle part (15) in a pivotable manner and is held in an off position of the on/off switch (22) by a return spring.

4. Electric shears according to one of Claims 1 to 3, **characterized in that** the gear mechanism (19) which is arranged in the tool head (14) comprises a reducing gear mechanism, which is in the form of a multi-stage planetary gear mechanism (34) having an on and off stage, and a deflecting gear mechanism, which is arranged downstream of said reducing gear mechanism in the power transmission path and which is in the form of a bevel gear mechanism (35) with two intermeshing bevel gears (36, 37) which are oriented at right angles to one another in respect of the gear axes, and **in that** the input stage of the planetary gear mechanism (34) is coupled to the electric motor (18) and the output stage of the planetary gear mechanism (34) is coupled to the first bevel gear (36) of the bevel gear mechanism (35) and the second bevel gear (37) is mounted on the drive shaft (16).

5. Electric shears according to Claim 4, **characterized in that** the gear stages of the planetary gear mechanism (34) have a common internal gear (41) which is fixed in the housing (13) and extends over the axial length of the planetary gear mechanism (34).

6. Electric shears according to Claim 4 or 5, **characterized in that** each gear stage of the planetary gear mechanism (34) has a sun gear (42), planetary gears (43) which mesh with the sun gear (42) and the internal gear (41), and a planetary gear carrier (44) which carries the planetary gears (43), **in that** the sun gear (42) of the input stage is mounted on the motor shaft (33) of the electric motor (18), the sun gear (42) of the following gear mechanism stage is attached to each planetary gear carrier (44), and the planetary gear carrier (44) of the output stage is firmly connected to an output shaft (60) which carries the one bevel gear (36).

7. Electric shears according to Claim 6, **characterized in that** the sun gears (42) which are mounted on the planetary gear carriers (44) are integrally formed with the respective planetary gear carrier (44).

8. Electric shears according to one of Claims 4 to 7, **characterized in that** the sun gear (42) of the input stage of the planetary gear mechanism (34) is plugged onto the motor shaft (33) such that it is reliably carried along.

9. Electric shears according to one of Claims 4 to 8, **characterized in that** the planetary gears (43) at least of the output stage of the planetary gear mechanism (34) are composed of sintered steel.

10. Electric shears according to one of Claims 4 to 9, **characterized in that** the internal gear (41) is a sintered part.

11. Electric shears according to one of Claims 4 to 10, **characterized in that** the bevel gears (36, 37) of the bevel gear mechanism (35) have an identical number of teeth.

12. Electric shears according to one of Claims 4 to 11, **characterized in that** the bevel gears (36, 37) of the bevel gear mechanism (35) are composed of brass.

13. Electric shears according to one of Claims 4 to 12, **characterized in that** the first bevel gear (36) is held in a ball bearing (38) and the second bevel gear (37) is pressed onto the drive shaft (16).

14. Electric shears according to one of Claims 1 to 13, **characterized in that** the drive shaft (16) has a threaded bore (47) which is introduced from the free end of the said drive shaft, and **in that** the disc-like rotary tool (11) which is supported on the support flange (45) is axially secured by a head screw, preferably a flat head screw (48), which is screwed into the threaded bore (47).

15. Electric shears according to one of Claims 1 to 14, **characterized in that** the housing (13) is flattened in the region of that shaft end section of the drive shaft (16) which emerges from the housing (13), and the size of the flattened region (17) is matched to the area of the disc-like rotary tool (11), and **in that** a protective hood (54) is arranged on the housing (13), said protective hood extending at least over that edge region of the disc-like rotary tool (11) which is at the top in the working position.

16. Electric shears according to Claim 15, **characterized in that** the protective hood (54) is integrally formed on the one housing shell (132) of the housing (13).

17. Electric shears according to Claim 15, **characterized in that** the protective hood (54) is held in a pivotable manner on the one housing shell (132) and additionally stretches over the edge region of the polygonal cutting wheel (12) which is at the front in the working direction and is mechanically coupled to the on/off switch (22) of the electric motor (18) in order to pivot.

18. Electric shears according to one of Claims 1 to 17, **characterized in that** at least one electric lamp, preferably in the form of an LED (56), is arranged in the front face, which faces the working direction, of the tool head (14).

19. Electric shears according to Claim 18, **characterized in that** the at least one electric lamp can be switched on and off by a switch which is manually accessible from the housing (13).

20. Electric shears according to Claim 19, **characterized in that** the electrical switch of the on/off switch (22) is of two-stage design and switches on the at least one lamp in its first switching position and closes the electrical circuit for the electric motor (18) in its second switching position.

## Revendications

1. Cisaille électrique, comprenant un boîtier (13), qui présente une tête d'outil (14) et une partie de préhension (15), avec un moteur électrique (18) disposé dans le boîtier (13), avec un dispositif marche/arrêt (22), qui présente un commutateur électrique disposé dans le circuit d'alimentation du moteur électrique (18) et un élément d'actionnement (23) pour le commutateur électrique, accessible sur le boîtier (13), avec un arbre d'entraînement (16) orienté transversalement à l'axe du boîtier et monte dans la tête d'outil (14), qui peut être entraîné par le moteur électrique (18) par le biais d'une transmission (19), avec un outil rotatif (11) pouvant être fixé sur l'arbre d'entraînement (16), avec un accumulateur d'énergie de grande capacité de charge, alimentant le moteur électrique (18), pouvant être rechargé, de petit volume, qui est intégré conjointement avec une carte électronique (21) et le dispositif marche/arrêt (22) dans la partie de préhension (15), **caractérisée en ce que** le boîtier (13) est recourbé en forme de banane et se compose de deux coques de boîtier (131, 132), **en ce que** l'élément d'actionnement (23) du dispositif marche/arrêt (22) est disposé sur la partie inférieure de la partie de préhension (15) et est réalisé sous forme de touche (24) de grande surface, saillant hors de la partie de préhension (15), et **en ce que** sur le côté supérieur de la partie de préhension (15) opposé à l'élément d'actionnement (23) est fixé un revêtement de préhension (32) avec une structure reproduisant une structure de surface d'une balle de golf, **en ce que** le commutateur électrique du dispositif marche/arrêt (22), une prise chargeur (27) accessible à travers un évidement (58) dans le boîtier (13) ainsi qu'un agencement de branchement pour charger et surveiller l'état de charge de l'accumulateur d'énergie (20) sont disposés sur la carte électronique (21), et l'accumulateur d'énergie (20) est réalisé sous forme d'accumulateur à ion lithium (20) et est disposé au-dessus de la carte électronique (21) et est mis en contact au moyen de fanions de raccordement (29) sur la carte électronique (21), **en ce que** la transmission (19) et au moins en partie le moteur électrique (18) sont disposés dans la tête d'outil (14), **en ce que** l'arbre d'entraînement (16) d'une part est reçu dans un roulement à billes (39) pressé dans l'une des coques du boîtier (132) et d'autre part est monté dans une douille frittée (40) pressée dans l'autre coque du boîtier (131) et présente, sur une portion d'extrémité d'arbre saillant latéralement au niveau du boîtier (13), une bride d'appui (45) avec un dispositif d'entraînement en rotation (46) réalisé sur celle-ci pour l'outil rotatif (11) en forme de disque réalisé en tant que couteau circulaire à plusieurs pans (12), et **en ce que** dans une région aplatie (17) du boîtier (13), est fixée, de manière détachable, une tôle de retenue de couteau (49) avec un couteau conjugué (51) fixé sur celle ci et coopérant avec le couteau circulaire à plusieurs pans (12), et une base d'appui (50).

2. Cisaille électrique selon la revendication 1, **caractérisée en ce qu'**un affichage de l'état de charge (28) visible sur le boîtier (13) est connecté à la carte électronique (21).

3. Cisaille électrique selon la revendication 1 ou 2, **caractérisée en ce que** la touche (24) est fixée de manière pivotante dans la partie de préhension (15) et est maintenue par un ressort de rappel dans une position sortie du dispositif marche/arrêt (22).

4. Cisaille électrique selon l'une quelconque des revendications 1 à 3, **caractérisée en ce que** la transmission (19) disposée dans la tête d'outil (14) comprend un réducteur réalisé en tant que transmission planétaire à plusieurs étages (34) avec un étage d'entrée et un étage de sortie, et un mécanisme de renvoi disposé après elle dans le flux de forces, lequel est réalisé en tant que transmission à pignons coniques (35) avec deux pignons coniques (36, 37) orientés à angle droit l'un par rapport à l'autre suivant leurs axes de pignons, et s'engrenant l'un avec l'autre, et **en ce que** l'étage d'entrée de la transmission planétaire (34) est accouplé au moteur électrique (18) et l'étage de sortie de la transmission planétaire (34) est accouplé au premier pignon conique (36) de la transmission à pignons coniques (35) et le deuxième pignon conique (37) est fixé sur l'arbre d'entraînement (16).

5. Cisaille électrique selon la revendication 4, **caractérisée en ce que** les étages de transmission de la transmission planétaire (34) présentent une couronne dentée (41) commune fixée dans le boîtier (13), qui s'étend au-delà de la longueur axiale de la transmission planétaire (34).

6. Cisaille électrique selon la revendication 4 ou 5, **caractérisée en ce que** chaque étage de transmission de la transmission planétaire (34) présente une roue solaire (42), des pignons planétaires (43) s'engrenant avec la roue solaire (42) et la couronne dentée (41), et un porte-satellites (44) portant les pignons planétaires (43), **en ce que** la roue solaire (42) de l'étage d'entrée est fixée sur l'arbre de moteur (33) du moteur électrique (18), la roue solaire (42) de l'étage de transmission suivant est fixée sur chaque porte-satellites (44) et le porte-satellites (44) de l'étage de sortie est connecté fixement à un arbre de sortie (60) portant le premier pignon conique (36).

7. Cisaille électrique selon la revendication 6, **caractérisée en ce que** les roues solaires (42) fixées sur les porte-satellites (44) sont réalisées d'une seule pièce avec le porte-satellites respectif (44).

8. Cisaille électrique selon l'une quelconque des revendications 4 à 7, **caractérisée en ce que** la roue solaire (42) de l'étage d'entrée de la transmission planétaire (34) est enfichée sur l'arbre de moteur (33) de manière solidaire en transmission.

9. Cisaille électrique selon l'une quelconque des revendications 4 à 8, **caractérisée en ce que** les pignons planétaires (43) d'au moins l'étage de sortie de la transmission planétaire (34) sont en acier fritté.

10. Cisaille électrique selon l'une quelconque des revendications 4 à 9, **caractérisée en ce que** la couronne dentée (41) est une pièce frittée.

11. Cisaille électrique selon l'une quelconque des revendications 4 à 10, **caractérisée en ce que** les pignons coniques (36, 37) de la transmission à pignons coniques (35) présentent un nombre égal de dents.

12. Cisaille électrique selon l'une quelconque des revendications 4 à 11, **caractérisée en ce que** les pignons coniques (36, 37) de la transmission à pignons coniques (35) sont en laiton.

13. Cisaille électrique selon l'une quelconque des revendications 4 à 12, **caractérisée en ce que** le premier pignon conique (36) est maintenu dans un roulement à billes (38) et le deuxième pignon conique (37) est pressé sur l'arbre d'entraînement (16).

14. Cisaille électrique selon l'une quelconque des revendications 1 à 13, **caractérisée en ce que** l'arbre d'entraînement (16) présente un alésage fileté (47) pratiqué depuis son extrémité frontale libre, et **en ce que** l'outil rotatif (11) en forme de disque reposant sur la bride d'appui (45) est fixé axialement par une vis à tête vissée dans l'alésage fileté (47), de préférence une vis à tête plate (48).

15. Cisaille électrique selon l'une quelconque des revendications 1 à 14, **caractérisée en ce que** le boîtier (13) est aplati dans la région de la portion d'extrémité arbre de l'arbre d'entraînement (16) sortant hors du boîtier (13), et la taille de la région aplatie (17) est adaptée à la superficie de l'outil rotatif (11) en forme de disque, et **en ce qu'**un capot de protection (54) est disposé sur le boîtier (13), lequel s'étend au moins au-delà de la région de bord supérieure, dans la position de travail, de l'outil rotatif (11) en forme de disque.

16. Cisaille électrique selon la revendication 15, **caractérisée en ce que** le capot de protection (54) est façonné sur l'une des coques du boîtier (132) du boîtier (13).

17. Cisaille électrique selon la revendication 15, **caractérisée en ce que** le capot de protection (54) est maintenu de manière pivotante sur l'une des coques du boîtier (132) et s'étend en outre au-delà de la région de bord avant, dans la direction de travail, du couteau circulaire à plusieurs pans (12) et est accouplé mécaniquement en vue de son pivotement au dispositif marche/arrêt (22) pour le moteur électrique (18).

18. Cisaille électrique selon l'une quelconque des revendications 1 à 17, **caractérisée en ce que** dans le côté avant tourné vers la direction de travail de la tête d'outil (14) est disposée au moins une lampe électrique réalisée de préférence sous forme de LED (56).

19. Cisaille électrique selon la revendication 18, **caractérisée en ce que** l'au moins une lampe électrique peut être allumée et éteinte avec un commutateur accessible manuellement sur le boîtier (13).

20. Cisaille électrique selon la revendication 19, **caractérisée en ce que** le commutateur électrique du dispositif marche/arrêt (22) est réalisé en deux étages, et dans sa première position de commutation, allume l'au moins une lampe et dans sa deuxième position de commutation, ferme le circuit électrique pour le moteur électrique (18).
